# EUROPEAN PATENT SPECIFICATION

(11) **EP 3 862 326 B1**
(45) Date of publication and mention of the grant of the patent: **25.12.2024**
(21) Application number: 21155192.4
(22) Date of filing: 04.02.2021
(51) Int. Cl.: C02F 1/52, C02F 1/56, C02F 1/66, C02F 103/26, C02F 1/00

(54) **LIQUID EFFLUENT PRE-TREATMENT PROCESS**
VERFAHREN ZUR VORBEHANDLUNG VON FLÜSSIGEN ABWÄSSERN
PROCÉDÉ DE PRÉTRAITEMENT DES EFFLUENTS LIQUIDES

(30) Priority: 05.02.2020 PT 2020116098
(43) Date of publication of application: 11.08.2021
(73) Proprietor: Instituto Politécnico de Coimbra, P-3000-271 Coimbra (PT)
(72) Inventor: Moura Neves de Castro, Luís Miguel, P-3885-580 Esmoriz (PT); Borges Fontes Negrão Beirão, Pedro Jorge, P-3000-323 Coimbra (PT); Martins da Costa, Paulo Ricardo, P-3030-328 Coimbra (PT); Pereira do Amaral, António Luís, P-3140-348 Pereira (PT); Ferreira Roseiro, Luís Manuel, P-3030-254 Coimbra (PT); Coelho Marques Pinheiro, Maria Nazaré, P-3040-786 Cernache (PT)
(74) Representative: Lourenço Martinho do Rosário, Ana Margarida

(56) References cited:
- EP-A1- 0 062 543
- GB-A- 2 331 514
- US-A- 5 084 165
- US-A1- 2008 135 478

## Description

### Context of the invention

The present invention falls within the scope of the cork industry, in the cork stopper subsector, concerning a process for the pre-treatment of liquid effluents resulting from the industrial process of cork stopper production.

There are two operations in the cork stopper industry, which generates liquid industrial effluent: cooking and washing. Cooking consists of immersing the cork planks in boiling water for approximately one hour, resulting in a liquid effluent - the cooking water - characterized by a high organic load and by the presence of large amounts of tannins. The other step that generates liquid effluent is the washing of the cork stoppers, an operation commonly referred to in the cork sector as washing, seeking to clean, de-dust, disinfect and, if necessary, bleach the corks stoppers, preparing them for the subsequent stages of finishing.

The result of these operations is an effluent characterized by a high polluting load, which prevents it from their discharge into the sewage network following the quality standards typically required by the management entity.

Usually, the industrial units of the cork sector are connected to the sewage network, where they discharge the industrial effluent. To reduce the polluting load of the effluents sent to the sewerage network, companies in this sector typically use a continuous and sequential physicochemical treatment that presupposes the addition of a coagulant, a neutralizer and a flocculant. This is followed by the sedimentation step to enable the separation of the liquid phase from the solid phase. This pre-treatment is carried out in an industrial wastewater pre-treatment plant (IWWPTP), which operates continuously, and consists of a sequence of three reactors and a sedimenter, connected in series, enabling the discharge of the treated effluent following the acceptance criteria of the sewage network's management entity. This system is, however, extremely expensive, particularly when the effluent flow is relatively low (less than 2 m³/day), as happens in small manufacturing units, which constitute a very significant fraction of the universe of cork stopper manufacturing companies.

Thus, the present invention discloses an innovative alternative, by allowing the appropriate treatment to be obtained, but with significantly lower investment and operating costs and less space requirement, since all the treatment is performed in a single reactor.

### Background of the invention

The present invention finds a more similar background in the following disclosures:
- Vilar et al. (2009) and Pintor et al. (2011) disclose the study of the decontamination of the cork industry's water via the solar photo-Fenton system;
- Minhalma et al. (2006) and Benitez et al. (2008) present studies on the treatment of wastewater resulting from the processing of cork by ozonation and ultrafiltration;
- Silva et al. (2016) studies the increase in biodegradability and the reduction in toxicity due to the application of ozone to the different molecular size fractions of the pollutants found in cork cooking water, obtained using membrane separation techniques;
- Ponce-Robles et al. (2017) proposes treatment by advanced oxidation techniques of the cooking effluent seeking to reuse it;
- Ge et al. (2018) discloses the study of a methodology for the treatment of cork cooking water that combines flocculation and adsorption with the regeneration of activated carbon assisted by microwaves;
- Wu et al. (2018) presents a study where ultrasonic and hydrodynamic cavitation is used as a way to increase the efficiency of the treatment of cork cooking wastewater via chemical oxidation with Fenton reagent;
- Gomes et al. (2018) discloses a study on the feasibility of treating cork cooking effluents in phyto-WWTP in laboratory units and presents their efficiency.

The disclosed solutions consist mainly of advanced oxidation and/or ultra or nanofiltration techniques to increase the biodegradability of the effluent, but since they involve very high operating and investment costs, their applicability will be very low in the treatment of effluents in the cork stopper industry. Further, relevant documents are US 2008/135478 A1, EP 0 062 543 A1, US 5 084 165 A, GB 2 331 514 A.

In the cork stopper industry, the effluent treatment plants, when they exist, perform the physicochemical and/or biological treatment in a sequence of several reactors, working continuously, leading to an extremely high cost for these treatment units.

Therefore, both the solutions disclosed and the situations existing in the industry differ from the present invention in that they do not constitute solutions at an industrial level oriented towards small plants, with effluent production of up to 2 m³/day, and that enable a compact unit to automatically reach the threshold values for discharge into the sewage network, enabling reduced operating and investment costs and low demand in terms of space occupation.

The process object of the present invention enables adequate treatment of the industrial effluent. It includes all the phases of coagulation, neutralization, flocculation, and sedimentation, through an automated way, in a single reactor, and without human intervention, substantially reducing the necessary space and the investment and operating costs vis-à-vis the solutions currently used in the cork stopper industry.

Thus, the present invention presents the following advantages vis-à-vis the state of the art:
- ensures the pre-treatment of liquid effluents from the cork stopper industry for them to be suitably discharged into the sewage network;
- reduces the environmental impact of the domestic cork stopper activity;
- performs the treatment in a single reactor and fully automatically, significantly reducing the installation costs for the pre-treatment of effluents;
- enables effluent treatment in a compact unit, significantly reducing the space required for its deployment compared to conventional systems;
- promotes the simplicity, practicality, and interactivity of the system's operation;
- eliminates human intervention in the wastewater treatment process of the cork stopper industry, reducing the risk of contact with the toxic chemicals used in the effluent's physicochemical treatment;
- reduces the needs and expenses with electric energy for pumping, aeration, and mixing, thus reducing energy consumption and the cost associated with the treatment of the effluents.

### Summary of the invention

An object of the present invention is a process for the pre-treatment of effluents from the cork stopper industry wherein the untreated effluent is subjected to chemical treatment, comprising sequentially the steps of coagulation, neutralization, flocculation, and sedimentation, in a sole reactor (2).

The process is based on the destabilization of the colloidal substances present in the effluent through a coagulation process followed by chemical neutralization and flocculation, to facilitate the precipitation of the colloidal and suspended solids present in the effluent, and to ensure the suitability of the effluent thus treated in light of the requirements for discharge into the sewage network.

The compact effluent pre-treatment system where the process of pre-treating effluents from the cork stopper industry occurs has a capacity of effluent treatment per cycle of up to 2 m³. The essential features of the invention are set out in independent process claim 1. Further, preferred embodiments are described in dependent claims 2-3.

The process of the invention comprises the following steps:
a) filling a single reactor (2) with untreated effluent;
b) phased and sequential addition of a coagulating agent, of a neutralizing agent, and of a flocculating agent to the reactor (2); whereby the coagulating and neutralizing agents are added to the reactor (2) in a phased and sequential way until a pH probe (5) measures a predefined pH value corresponding to the addition of the coagulating agent and a second pH value corresponding to the addition of the neutralizing agent;
c) sedimentation of the effluent resulting from the addition from steps (b);d) formation of a first sludge fraction at the bottom of the reactor (2), of a second lower extract fraction and of a third upper fraction of a supernatant from the treated effluent, resulting from steps (b) and (c); whereby the reactor (2) has two different means of drainage for the upper and lower fractions of the supernatant extract;
e) sequential drainage of the third upper extract fraction and of the second lower extract fraction of the supernatant of the treated effluent; whereby opening a valve (4) of the upper supernatant extract fraction first allows its draining to a treatment plant, followed by deactivating said valve (4) after the upper supernatant extract fraction is drained off and activating a valve (4) of the lower extract fraction of the supernatant, enabling the draining of the lower extract fraction of the supernatant;
f) drainage of the sludge fraction; characterized by step (a) being preceded by the introduction of air into the reactor (2) through an air pump (6) during the period until the beginning of step (c).

The process described has the specific advantage that all chemical pre-treatment steps of the untreated effluent occur in a single reactor, thus avoiding the need to use multiple reactors to perform the coagulation, neutralization, flocculation, and sedimentation steps.

The process described ensures the treatment of effluents, comprising all treatment steps, in a single cycle of up to 2 m³. This process is suitable for small plants with a daily effluent production of up to 2 m³.

The compact wastewater pre-treatment system in which the described process is implemented has the following essential structural elements:
a) a reactor (2);
b) at least one tank (7) for the addition of a coagulating agent to the reactor (2);
c) at least one tank (10) for the addition of a neutralizing agent to the reactor (2);
d) at least one tank (13) for the addition of a flocculating agent to the reactor (2);
in a way in which the tanks (7)(10)(13) are connected to the reactor (2) feeding.

### Brief description of the drawings

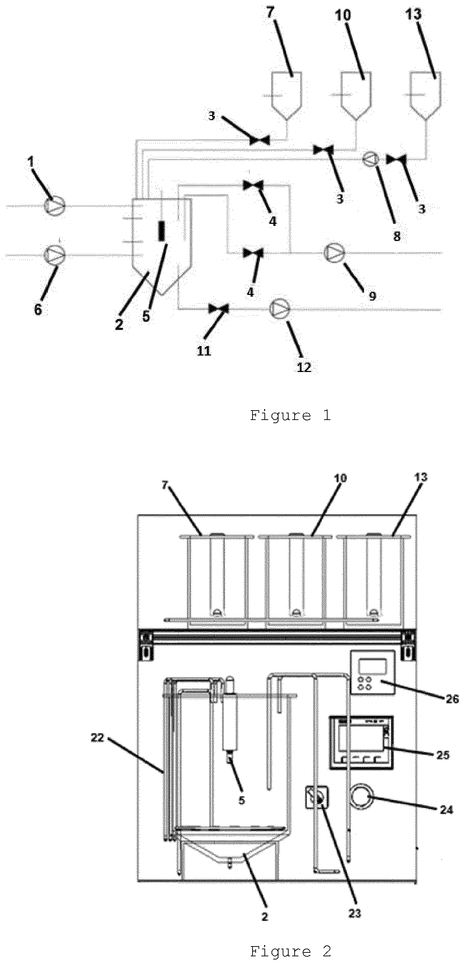

Figure 1 - Schematic representation of the automated system where the process for treatment of effluents from the cork stopper industry occurs, with the reactor (2) being filled with untreated effluent through the reactor pump (1). The reactor (2) has a pH probe (5). The reactor (2) receives air via the air pump (6) and receives the coagulating agent contained in the tank (7), the neutralizing agent contained in the tank (10), and the flocculating agent contained in the tank (13) sequentially through the valves (3) and the metering pump (8), so that after the treatment, the treated effluent and the physicochemical sludge are drained through the opening of the valves (4)(11) and via the action of the pumps (9) (12).
Figure 2 - Schematic representation of another perspective of the automated system where the process for treatment of effluents from the cork stopper industry occurs, namely an ON/OFF button (23), an emergency button (24), a touchscreen (25), a controller (26) of the pH probe (5) inserted in the reactor (2), which receives inside it and in a sequential way the coagulant agents contained in the tank (7), neutralizer contained in the tank (10), and flocculant contained in the tank (13).

### Detailed description of the invention

Since the process of treating liquid effluents from the cork stopper industry has been described in the summary of the invention, preferred embodiments of this process are now described.

In a preferred embodiment of the invention, the reactor has at least one air pump (6) feeding air to the reactor (2) . The air pump (6) promotes the mixing of the effluent with the chemical agents during the treatment process.

In a further preferred embodiment of the invention, the reactor (2) presents at least one untreated effluent feeding mean, at least one treated effluent drainage mean, and at least one physicochemical sludge drainage mean.

According to the invention, the reactor (2) has two different means of drainage for the upper and lower fractions of the supernatant extract of the treated effluent.

The means of feeding and the means of draining the reactor (2) are pipes working in conjunction with valves (4) (11) and/or pumps (1) (9) (12) .

In a preferred embodiment of the invention, the tanks (7) (10) (13) for the addition of coagulating agent, neutralizing agent, and flocculating agent to the reactor (2) are positioned above the top of the reactor (2), so that the coagulating agent, neutralizing agent, and flocculating agent, respectively, are added to the reactor (2) by gravity. The fact that coagulants, neutralizing agents, and flocculants are added by gravity reduces the need to use pumps for their introduction, thus reducing energy costs.

The means of feeding the tanks to the reactor (2) are pipes working in conjunction with valves (3).

In a preferred embodiment, the pre-treatment system features a metering pump (8) downstream of the valve (3) of the tank (13) that regulates the flocculating agent to promote the flow of the chemical agent to the reactor (2).

The pre-treatment system further includes a command and control unit (27) that enables the implementation of a fully automated system with permanent monitoring of the treatment process.

The reactor (2) has a capacity between 0,5 m³ and 2 m³, with an inverted cylindrical-conical shape adapted to the sedimentation process.

It is now important to detail the process of wastewater pre-treatment in the cork stopper industry and its relationship with the pre-treatment system.

The addition of the chemical agents to the reactor, i.e., the coagulating agent, the neutralizing agent, and the flocculating agent, is triggered by the opening of a valve (3) located at the outlet of each tank (7) (10) (13) of chemical agent.

The flow of the flocculating agent to the reactor (2) is promoted by a metering pump (8) since, as it is a chemical agent that does not alter the pH of the effluent, it cannot be controlled using this parameter, but instead by the time in which it is pumped into the reactor (2).

Thus, the process of treating the untreated effluent begins by activating the reactor pump (1), responsible for filling the reactor (2) with the untreated effluent.

After the reactor (2) is filled, the reactor pump (1) is deactivated, and then an air pump (6) is activated, introducing air into the reactor (2), promoting the agitation of the effluent to be treated and its mixture as the physicochemical reactions of coagulation, neutralization, and flocculation occur. The air pump (6) remains in operation until the complete chemical coagulation reaction after addition of the coagulating agent to the reactor (2) to ensure complete mixing of all chemical agents, i.e., step (a) is preceded by the introduction of air into the reactor (2) during the period until step (c) begins.

The pH value of the untreated effluent from the cork stopper industry inside the reactor (2) is measured by the pH probe (5), controlled by the pH controller (26) connected to the command and control unit (27). Permanent measurement of the pH value inside the reactor (2) determines the amount of coagulating and neutralizing agents to be added to the reactor (2). Typically, the value of an untreated effluent resulting from the cork stopper industry is 5,5.

In turn, the corresponding tanks (7)(10)(13) of the coagulating, neutralizing, and flocculating agents have individual level sensors, which measure the level of each agent inside the corresponding tank, transmitting the measured information to the command and control unit (27). If the measured values agree with the predefined conditions, the addition of the chemical agents to the reactor (2) in the order defined by the method described will begin.

The addition of the coagulating agent is the first effective step in the treatment of the effluent and promotes the process of coagulation of the untreated effluent deposited in the reactor (2), followed by the neutralization step, promoted through the addition of a neutralizing agent.

Thus, according to the invention, the coagulating and neutralizing agents are added to the reactor (2) in a phased and sequential way, until the pH probe (5) measures a predefined pH value corresponding to the addition of the coagulating agent and a second pH value corresponding to the addition of the neutralizing agent, with this addition being interrupted by the deactivation of the corresponding pumps (9) (12) .

In a preferred embodiment of the invention, the addition of the coagulating agent in step (b) is stopped when the measured pH is 3,5.

In a preferred embodiment of the invention, the addition of the neutralizing agent is stopped when the measured pH value is 7.

In a further embodiment of the invention, the addition of the flocculating agent is interrupted after the predefined time of addition of the flocculating agent has elapsed. This addition is interrupted by deactivating the valve (3) and the metering pump (8).

The last effective step of the effluent's treatment, i.e., the sedimentation, starts with the deactivation of the air pump (6), starting the sedimentation phase, which consists of the physical separation of the solid and liquid phases by deposition of the solids at the bottom of the reactor (2), with the sedimentation time being predefined in the command and control unit (27).

Finally, the drainage of the treated effluent is started by activating the drainage pump (9), responsible for draining the treated effluent.

According to the invention, the drainage of the treated effluent is performed by two different means of drainage for the upper and lower fractions of the supernatant extract of the treated effluent.

Thus, by opening a valve (4) of the upper supernatant extract, it is first drained to a treatment plant. After the upper extract of the treated effluent is drained off, valve (4) is deactivated and a valve (4) of the lower extract of the supernatant is activated, enabling the draining of this fraction of the treated effluent.

Finally, the chemical sludge is drained by activation of a sludge pump (12), responsible for collecting the sludge, and via the sludge valve (11).

The reactor (2) has a capacity between 0.5 m³ and 2 m³, with an inverted cylindrical-conical shape adapted to the sedimentation process.

### Tests and Results

The liquid effluent treatment process of the cork stopper industry was tested in a pilot system for the treatment of effluents up to 2 m³/day.

For this purpose, data were collected on the raw effluents from washing and cooking in industrial units of the cork industry. The average characteristics of the raw washing and cooking effluents collected in these plants (nine different samples of washing effluent collected in three companies and fifteen different samples of cooking effluent collected in five companies) are in the following table.

**Table 1 - Mean values for the washing and cooking effluents from the cork industries in the Santa Maria da Feira region, Portugal**

| Parameter | Mean | Standard deviation | Maximum | Minimum |
|---|---|---|---|---|
| Raw washing effluents | | | | |
| pH (Sørensen scale) | 4,8 | 0,9 | 6,1 | 3,9 |
| Total suspended solids - TSS (mg/L) | 1320 | 635 | 2253 | 273 |
| Chemical oxygen demand - COD (mgO₂/L) | 1349 | 442 | 1964 | 775 |
| Biochemical oxygen demand after 5 days - BOD₅ (mgO₂/L) | 314 | 217 | 650 | 131 |
| Phenols (mg/L) | 1,3 | 0,76 | 2,3 | 0,15 |
| Chlorides (mg/L) | 173,8 | 59,1 | 205,1 | 54,3 |
| Conductivity (pS/cm) | 2185 | 880 | 3110 | 976 |

| Raw cooking effluents | | | | |
|---|---|---|---|---|
| pH (Sørensen scale) | 5,2 | 0,6 | 6,4 | 4,5 |
| Total suspended solids - TSS (mg/L) | 315 | 272 | 795 | 20 |
| Chemical oxygen demand - COD (mgO₂/L) | 4146 | 2829 | 9300 | 740 |
| Biochemical oxygen demand after 5 days - BOD₅ (mgO₂/L) | 1157 | 934 | 2600 | 130 |
| Phenols (mg/L) | 680 | 69 | 720 | 600 |
| Conductivity (pS/cm) | 1489 | 729 | 2623 | 355 |

Table 2 shows the Maximum Allowable Values (MAV) for the sewage network in the municipality of Santa Maria da Feira (Regulation 340/2016 of March 30), where most of the Portuguese cork stoppers production companies are located, and which are similar to the MAV practised by several other sewage network management entities in Portugal.

**Table 2 - Typical Maximum Allowable Values (MAV) for discharge into the municipal sewage network**

| Parameter | MAV |
|---|---|
| pH (Sorensen scale) | 6,0 - 9,0 |
| Total Suspended Solids, TSS (mg/L) | 1000 |
| Chemical Oxygen Demand, COD (mgO₂/L) | 1000 |
| Biochemical Oxygen Demand, BOD₅ (mgO₂/L) | 500 |
| Phenols (mg/L) | 20 |
| Chlorides (mg/L) | 150 |
| Conductivity (pS/cm) | 2000 |

Comparing the characteristic values of the effluents from washing and cooking in the cork companies with the maximum allowable values (MAV) given in table 2 it is seen that raw effluent generated in both operations of the cork stopper industry is unsuitable to be discharged directly into the sewage network. Several effluent parameters present mean values higher than those allowable for discharge.

Table 3 presents the results obtained for different types of effluents from the cork stopper industry after the optimization of the physicochemical treatment carried out through the process of pre-treating liquid effluents from the cork stopper industry, the object of the present invention, in terms of dosage of the FeCl₃ coagulant, the NaOH neutralizer, and the anionic polyelectrolyte flocculant.

**Table 3 - Ideal dosages to perform the physicochemical treatment of the effluent from the cork stopper industry according to the type of effluent**

| Treatment type / agent used | | Type of effluent treated | | | | | |
|---|---|---|---|---|---|---|---|
| | | Washing | | Cooking | | Mixed: 70% washing + 30% cooking (v/v) | |
| | | Dosage (L/m³) | Final pH | Dosage (L/m³) | Final pH | Dosage (L/m³) | Final pH |
| Coagulation | FeCl₃ 40% (m/m) | 3,0 | 3,2 | 3,4 | 3,1 | 3,3 | 3,2 |
| Neutralizatio n | NaOH 30% (m/m) | 3,4 | 6,7 | 3,7 | 7,2 | 3,6 | 6,8 |
| Flocculation | Anionic polyelec trolyte 1% (m/m) | 1,6 | 6,6 | 1,4 | 7,1 | 1,6 | 6,8 |

Using the dosages identified in table 3, we obtained the results shown in table 4 in the physicochemical treatment experiments performed with the washing, cooking, and mixed effluents. The parameters of pH, total suspended solids (TSS), chemical oxygen demand (COD), biochemical oxygen demand (BOD), phenols, chlorides, and conductivity were measured.

**Table 4 - Results of physicochemical treatment experiments performed on the washing, cooking, and mixed effluents, and removal efficiency for each analysed parameter.**

| Parameter | Washing | | |
|---|---|---|---|
| | raw | treated | Efficiency (%) |
| pH (Sørensen scale) | 4,1 | 6,3 | |
| TSS (mg/L) | 2100 | 15 | 99,3% |
| COD (mgO₂/L) | 1960 | 280 | 85,7% |
| BOD (mgO₂/L) | 410 | 370 | 9,8% |
| Phenols (mg/L) | 0,73 | 0,52 | 28,8% |
| Chlorides (mg/L) | 120 | 142 | -18,3% |
| Conductivity (pS/cm) | 1520 | 1960 | -28,9% |

| Parameter | Cooking | | |
|---|---|---|---|
| | raw | treated | Efficiency (%) |
| pH (Sørensen scale) | 4,9 | 6,8 | |

| Parameter | Washing | | |
|---|---|---|---|
| | raw | treated | Efficiency (%) |
| TSS (mg/L) | 510 | 116 | 77,3% |
| COD (mgO₂/L) | 4720 | 820 | 82,6% |
| BOD (mgO₂/L) | 970 | 568 | 41,4% |
| Phenols (mg/L) | 189 | 19 | 89,9% |
| Chlorides (mg/L) | 24 | 25 | -4,2% |
| Conductivity (µS/cm) | 1489 | 1780 | -19,6% |

| Parameter | Mixed: 70% washing + 30% cooking (v/v) | | |
|---|---|---|---|
| | raw | treated | Efficiency (%) |
| pH (Sørensen scale) | 4,3 | 6,1 | |
| TSS (mg/L) | 1100 | 160 | 85,5% |
| COD (mgO₂/L) | 1730 | 460 | 73,4% |
| BOD (mgO₂/L) | 310 | 320 | -3,2% |
| Phenols (mg/L) | 48 | 12 | 75,0% |
| Chlorides (mg/L) | 108 | 121 | -12,0% |
| Conductivity (µS/cm) | 1360 | 1870 | -37,5% |

According to the results obtained, which are described in table 4 and the MAV defined by the sewage network management entity, in all cases, the treated effluent complies with the effluent's discharge conditions (except for the BOD₅ parameter in the treatment of the cooking effluent, which is 14% above the corresponding MAV). Therefore, the compact system for pre-treatment of liquid effluents from the cork stopper industry, which is the object of the present invention, is suitable for treating the effluent from the cork stopper industry and can be successfully adapted by small industrial units with low daily effluent volumes.

### References

Benitez F.J.; Acero, J.L.; Leal, A.I.; Real, F.J. (2008) Ozone and membrane filtration based strategies for the treatment of cork processing wastewaters. Journal of Hazardous Materials, 152-1, 373-380. https://doi.org/ 10.1016/j.jhazmat.2007.07.007.

Ge, X.; Wu Z.; Cravotto G.; Manzoli M.; Cintas, P.; Wu Z. (2018) Cork wastewater purification in a cooperative flocculation/adsorption process with microwave-regenerated activated carbon Journal of Hazardous Materials, 360, 412-419. https://doi.org/10.1016/j.jhazmat.2018.08.022.

Gomes, A.C.; Silva, L.; Albuquerque, A.; Simões, R.; Stefanakis, A.I. (2018) Investigation of lab-scale horizontal subsurface flow constructed wetlands treating industrial cork boiling wastewater Chemosphere, 207, 430-439. https://doi.org/10.1016/j.chemosphere.2018.05.123.

Minhalma M.; Dominguez, J.R.; Pinho, M.N. (2006) Cork processing wastewaters treatment by an ozonization/ ultrafiltration integrated process. Desalination, 191, 1-3, 148-152. https://doi.org/10.1016/j.desal.2005.04.126.

Pintor A.M.A.; Vilar, V.J.P.; Boaventura, R.A.R. (2011) Decontamination of cork wastewaters by solar-photo- Fenton process using cork bleaching wastewater as H2O2 source, Solar Energy, 85-3, 579-587. https://doi.org/10.1016/j.solener. 2011.01.003.

Ponce-Robles, L.; Miralles-Cuevas, S.; Oller, I.; Aguera, A.; Trinidad-Lozano, M.J.; Yuste, F.J., Malato, S. (2017) Cork boiling wastewater treatment and reuse through combination of advanced oxidation technologies. Environ Sci Pollut Res Int, 24(7), 6317-6328. doi: 10.1007/s11356-016-7274-0.

Regulamento n° 340/2016 do Municipio de Santa Maria da Feira, Diário da República, 2a série, n° 62 de 30 de março.

Santos, D.C.; Silva, L.; Albuquerque, A.; Simões, R.; Gomes, A.C. (2016) Biodegradability enhancement and detoxification of cork processing wastewater molecular size fractions by ozone. Bioresource Technology, 147, 143-151. https:// doi.org/10.1016/ j.biortech.2013.07.154.

Vilar, V.J.P.; Maldonado, M.I.; Oller, I.; Malato, S.; Boaventura, R.A.R. (2009) Solar treatment of cork boiling and bleaching wastewaters in a pilot plant. Water Research, 43-16, 4050-4062. https://doi.org/10.1016/j.watres.2009.06.019.

Wu, Z.; Yuste-Córdoba, F.J.; Cintas, P.; Wu, Z.; Boffa, L.; Mantegna, S.; Cravotto, G. (2018) Effects of ultrasonic and hydrodynamic cavitation on the treatment of cork wastewater by flocculation and Fenton processes. Ultrasonics Sonochemistry, 0B, 3-8. https://doi.org/10.1016/ j.ultsonch. 2017.04.016

## Claims

1. Process for pre-treating liquid effluents comprising the following steps:
a) filling a single reactor (2) with untreated effluent;
b) phased and sequential addition of a coagulating agent, of a neutralizing agent, and of a flocculating agent to the reactor (2); whereby the coagulating and neutralizing agents are added to the reactor (2) in a phased and sequential way until a pH probe (5) measures a predefined pH value corresponding to the addition of the coagulating agent and a second pH value corresponding to the addition of the neutralizing agent;
c) sedimentation of the effluent resulting from the addition from steps (b);
d) formation of a first sludge fraction at the bottom of the reactor (2), of a second lower extract fraction and of a third upper extract fraction of a supernatant from the treated effluent, resulting from steps (b) and (c); whereby the reactor (2) has two different means of drainage for the upper and lower fractions of the supernatant extract;
e) sequential drainage of the third upper extract fraction and of the second lower extract fraction of the supernatant of the treated effluent; whereby opening a valve (4) of the upper supernatant extract'` fraction first allows its draining to a treatment plant, followed by deactivating said valve (4) after the upper supernatant extract fraction is drained off and activating a valve (4) of the lower extract fraction of the supernatant, enabling the draining of the lower extract fraction of the supernatant;
f) drainage of the sludge fraction;
**characterized by** step (a) being preceded by the introduction of air into the reactor (2) through an air pump (6) during the period until the beginning of step (c).

2. Process according to claim 1 **characterized by** the addition of the coagulating agent in step (b) of claim 1 being interrupted when the measured pH is 3,5.

3. Process according to claim 2 **characterized by** the addition of the neutralizing agent in step (b) of claim 1 being interrupted when the measured pH is 7.

## Patentansprüche

1. Verfahren zur Vorbehandlung von Abwasser, umfassend die folgenden Schritte:
a) Befüllen eines einzelnen Reaktors (2) mit unbehandeltem Abwasser;
b) Phasenweise und sequentielle Zugabe eines Koagulierungsmittels, eines Neutralisationsmittels und eines Flockungsmittels in den Reaktor (2); wobei das Koagulierungsmittel und das Neutralisationsmittel phasenweise und sequentiell in den Reaktor (2) zugegeben werden, bis eine pH-Sonde (5) einen vordefinierten pH-Wert misst, entsprechend der Zugabe des Koagulierungsmittels, sowie einen zweiten pH-Wert, entsprechend der Zugabe des Neutralisationsmittels;
c) Sedimentation des aus den Zugaben gemäß den Schritten (b) resultierenden Abwassers;
d) Bildung einer ersten Schlammfraktion am Boden des Reaktors (2), einer zweiten unteren Extraktfraktion und einer dritten oberen Extraktfraktion eines Überstands aus dem behandelten Abwasser, resultierend aus den Schritten (b) und (c); wobei der Reaktor (2) zwei verschiedene Drainagevorrichtungen für die obere und die untere Fraktion des Überstandsextrakts aufweist;
e) Sequentielle Drainage der dritten oberen Extraktfraktion und der zweiten unteren Extraktfraktion des Überstands des behandelten Abwassers; wobei das Öffnen eines Ventils (4) der oberen Überstandsextraktfraktion zunächst deren Ableitung zu einer Kläranlage ermöglicht, gefolgt von der Deaktivierung des besagten Ventils (4), nachdem die obere Überstandsextraktfraktion abgeleitet wurde, und der Aktivierung eines Ventils (4) der unteren Extraktfraktion des Überstands, wodurch die Drainage der unteren Extraktfraktion des Überstands ermöglicht wird;
f) Drainage der Schlammfraktion;
**dadurch gekennzeichnet, dass** dem Schritt (a) die Einleitung von Luft in den Reaktor (2) durch eine Luftpumpe (6) während des Zeitraums bis zum Beginn von Schritt (c) vorausgeht.

2. Verfahren nach Anspruch 1, **dadurch gekennzeichnet, dass** die Zugabe des Koagulierungsmittels in Schritt (b) des Anspruchs 1 unterbrochen wird, wenn der gemessene pH-Wert 3,5 beträgt.

3. Verfahren nach Anspruch 2, **dadurch gekennzeichnet, dass** die Zugabe des Neutralisationsmittels in Schritt (b) des Anspruchs 1 unterbrochen wird, wenn der gemessene pH-Wert 7 beträgt.

## Revendications

1. Procédé de prétraitement des effluents liquides comprenant les étapes suivantes:
a) remplissage d'un réacteur unique (2) avec un effluent non traité;
b) ajout progressif et successif d'un agent coagulant, d'un agent neutralisant et d'un agent floculant au réacteur (2); au cours duquel les agents coagulant et neutralisant sont ajoutés au réacteur (2) de façon progressive et successive jusqu'à ce qu'une sonde de pH (5) mesure une valeur de pH prédéfinie correspondant à l'ajout de l'agent coagulant et une seconde valeur de pH correspondant à l'ajout d'un agent neutralisant;
c) sédimentation de l'effluent résultant de l'ajout réalisé aux étapes (b);
d) formation d'une première fraction de boue dans le fond du réacteur (2), d'une deuxième fraction d'extrait inférieure et d'une troisième fraction d'extrait supérieure d'un surnageant provenant d'un effluent traité résultant des étapes (b) et (c); au cours de laquelle le réacteur (2) dispose de deux moyens de drainage différents pour les fractions supérieure et inférieure de l'extrait de surnageant;
e) drainage consécutif de la troisième fraction d'extrait supérieure et de la deuxième fraction d'extrait inférieure du surnageant de l'effluent traité; au cours duquel l'ouverture d'une soupape (4) de la fraction d'extrait de surnageant supérieure permet d'abord son action drainante vers une usine de traitement, suivie par la désactivation de ladite soupape (4) après que la fraction d'extrait de surnageant supérieure a été drainée et a activé une soupape (4) de la fraction d'extrait inférieure du surnageant, facilitant ainsi la fraction d'extrait inférieure du surnageant;
f) drainage de la fraction de boue;
**caractérisé en ce que** l'étape (a) est précédée par l'apport d'air dans le réacteur (2) par l'intermédiaire d'une pompe à air (6) pendant la période jusqu'au début de l'étape (c).

2. Procédé selon la revendication 1 **caractérisé en ce que** l'ajout de l'agent coagulant dans l'étape (b) de la revendication 1 est interrompu lorsque le pH mesuré est 3,5.

3. Procédé selon la revendication 2 **caractérisé en ce que** l'ajout de l'agent neutralisant dans l'étape (b) de la revendication 1 est interrompu lorsque le pH mesuré est 7.
